(19) Europäisches Patentamt
European Patent Office
Office européen des brevets

(11) Veröffentlichungsnummer: **0 325 997 A2**

(12) **EUROPÄISCHE PATENTANMELDUNG**

(21) Anmeldenummer: **89100749.4**

(22) Anmeldetag: **18.01.89**

(51) Int. Cl.[4]: **C08F 8/18 , C08F 8/32 , C08L 63/00 , C08G 18/62**

(30) Priorität: **26.01.88 DE 3802176**

(43) Veröffentlichungstag der Anmeldung: **02.08.89 Patentblatt 89/31**

(84) Benannte Vertragsstaaten: **AT BE CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Bronstert, Klaus, Dr.**
**Gartenstrasse 26**
**D-6719 Carlsberg(DE)**
Erfinder: **Schmitt, Werner**
**Ludwigshafener Strasse 21 b**
**D-6710 Frankenthal(DE)**
Erfinder: **Aydin, Oral, Dr.**
**Sophienstrasse 14**
**D-6800 Mannheim 1(DE)**
Erfinder: **Walter, Hans-Michael Dr.**
**Haagweg 6**
**D-6701 Ruppertsberg(DE)**
Erfinder: **Krause, Hans-Joachim, Dr.**
**Pariser Strasse 31**
**D-6700 Ludwigshafen(DE)**

# (54) Copolymerisate des Isobutylens mit chloracetylierten oder alkylaminoacylierten Styrolen, deren Herstellung und ihre Verwendung zur Herstellung von Polyurethanen bzw. Epoxidharzen oder vernetzten Polymerisatmassen.

(57) Die Erfindung betrifft Copolymerisate des Isobutylens, bestehend aus 60 bis 99 Gewichtsteilen Isobutylen und 1 bis 40 Gewichtsteilen eines substituierten Vinylaromaten der allgemeinen Formel:

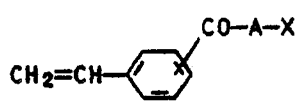

I,

worin A ein Alkylen-, Cycloalkylen- oder Arylenrest mit maximal 22 Kohlenstoffatomen und X ein Halogen oder eine tertiäre Aminogruppe der allgemeinen Formeln:

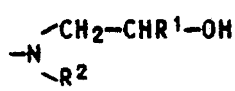

oder

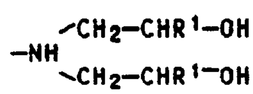

ist, in denen $R^1$ eine $C_1$- bis $C_4$-Alkylgruppe oder Wasserstoff und $R^2$ ein Alkyl-, Cycloalkyl- oder Arylrest mit maximal 10 Kohlenstoffatomen bedeuten, ein Verfahren zur Herstellung der Copolymerisate in dem ein entsprechendes Isobutylen-Vinylaromat-Copolymerisat nach Friedel-Crafts-Reaktion mit einem Monohalogencarbonsäureanhydrid oder Monohalogencarbonsäurehalogenid und gegebenenfalls anschließend mit einem oder mehreren Aminen der allgemeinen Formeln:

EP 0 325 997 A2

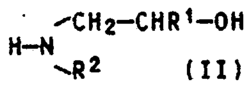 (II) oder 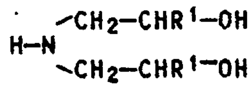 (III)

worin $R^1$ und $R^2$ die oben angegebenen Bedeutungen aufweisen, umgesetzt wird sowie die Verwendung der Copolymerisate zur Herstellung von Polyurethane bzw. Epoxidharzen und als mit Aminen oder Polyaminen vernetzbare Polymerisatmassen.

# Copolymerisate des Isobutylens mit chloracetylierten oder alkylaminoacylierten Styrolen, deren Herstellung und ihre Verwendung zur Herstellung von Polyurethanen bzw. Epoxidharzen oder vernetzten Polymerisatmassen

Die Erfindung betrifft Copolymerisate des Isobutylens mit Molekulargewichten - bestimmt durch Gelpermeationschromatographie - von 700 bis 200 000, bestehend aus 60 bis 99 Gewichtsteilen Isobutylen und 1 bis 40 Gewichtsteilen eines substituierten Vinylaromaten, die Herstellung derartiger Isobutylencopolymerisate durch Substitutionsreaktionen an Isobutylen-Vinylaromat-Copolymerisaten und die Verwendung der Isobutylencopolymerisate zur Herstellung anderer Polymerisate durch übliche Umsetzungen.

Derartige Copolymerisate weisen Eigenschaften auf, die sich beträchtlich von den Eigenschaften der Isobutylen- bzw. Styrolhomopolymerisate sowie der Isobutylen-Styrol-Copolymerisate unterscheiden können.

Isobutylen-Styrol-Copolymerisate sowie Isobutylencopolymerisate mit Styrolderivaten sind an sich bekannt (vgl. z.B. EP-A-115 635, GB-A-1 130 680, US-A-3 071 567 oder US-A-3 001 608). Zur Herstellung derartiger Isobutylencopolymerisate werden Gemische aus Isobutylen und Styrol oder Styrolderivaten in Abwesenheit oder Gegenwart eines Lösungsmittels kationisch polymerisiert, wobei als Katalysatoren vorwiegend Lewis-Säuren geeignet sind. Für die Herstellung der Isobutylen-Styrol-Copolymerisate eignet sich eine diskontinuierliche Polymerisation in Gegenwart eines niedrig siedenden Lösungsmittels wie Propan oder Butan und in Gegenwart von $AlCl_3$, Aluminiumalkyldihalogenid oder Aluminiumdialkylhalogenid und Alkylhalogenid. Besonders geeignet ist ein kontinuierliches Copolymerisationsverfahren gemäß EP-A-115 635.

Es ist auch bereits bekannt, Copolymerisate des Isobutylens mit Vinylaromaten durch Umsetzung mit Salpetersäure und anschließender Hydrierung in Aminogruppen enthaltende Isobutylen-Styrol-Copolymerisate umzuwandeln, die als Ausgangsstoffe für Polyurethane bzw. Epoxidharze, als Zwischenprodukte für polymere Isocyanate und zur Modifizierung anderer Kunststoffe verwendet werden können (vgl. EP-A-238 001). Nachteilig bei diesen bekannten Aminogruppen enthaltenden Copolymerisaten ist der Umstand, daß die vollständige Umwandlung der im Copolymerisat gebundenen Nitrogruppen in Aminogruppen relativ schwierig zu realisieren ist.

Aufgabe der Erfindung war es, leicht herstellbare in organischen Lösungsmitteln lösliche Copolymerisate des Isobutylens mit Vinylaromaten zu schaffen, die aufgrund der Anwesenheit von funktionellen Gruppen zur Herstellung von Polyurethanen oder von mit Aminen oder Polyaminen bzw. Epoxidharzen vernetzbaren Polymerisatmassen geeignet sind.

Diese Aufgabe wurde durch Isobutylencopolymerisate gemäß Ansprüche 1 und 2, durch ein Verfahren zur Herstellung der Isobutylencopolymerisate nach Anspruch 3 und die Verwendung der Copolymerisate des Isobutylens mit chloracetylierten oder alkylaminoacylierten Styrolen zur Herstellung der entsprechenden Polyurethane bzw. Epoxidharze oder vernetzter Polymerisatmassen gelöst.

In den erfindungsgemäß substituierten Isobutylencopolymerisaten sind die Vinylaromaten vorzugsweise solche, die sich vom Styrol, Vinylnaphthalin, Vinylanthracen etc., insbesondere aber vom Styrol ableiten. In den Isobutylencopolymerisaten sind 60 bis 99, bevorzugt 70 bis 97 Gewichtsteile Isobutylen und 1 bis 40, bevorzugt 3 bis 30 Gewichtsteile der substituierten Vinylaromaten einpolymerisiert. Die Isobutylencopolymerisate weisen Molekulargewichte - bestimmt durch Gelpermeationschromatographie (GPC) von 700 bis 200 000, bevorzugt von 5 000 bis 100 000, auf. Die Bestimmung des Molekulargewichts wird durch Vergleich mit einer an Polystyrol oder Polyisobutylen geeichten Meßkurve vorgenommen (vgl. G. Glöckner "Polymercharakterisierung durch Flüssigkeitschromatographie", Verlag A. Hüthig, Heidelberg, 1982. Gemessen wird üblicherweise in 0,25 gew.%iger Tetrahydrofuranlösung bei 23 °C und einer Durchflußgeschwindigkeit von 1,2 ml/min). Die erfindungsgemäßen Isobutylencopolymerisate sind in organischen Lösungsmitteln löslich. Die Umsetzung der Isobutylen-Styrol-Copolymerisate erfolgt mit den Monohalogencarbonsäurechloriden oder -anhydriden nach an sich bekannten Methoden bevorzugt in Lösung. Es ist vorteilhaft, Copolymerisate hoher Viskosität zunächst in geeigneten Lösungsmitteln zu lösen, um eine vollständige Umsetzung zu erreichen.

Als Lösungsmittel sind sowohl chlorierte aromatische Kohlenwasserstoffe wie Chlorbenzol oder Dichlorbenzol als auch inerte aliphatische oder alicyclische Kohlenwasserstoffe geeignet, z.B. Hexan, Octan, Cyclohexan oder Dekalin. Weniger geeignet sind chlorierte Aliphaten wie Methylenchlorid oder Tetrachlorkohlenstoff, da sie unter den Reaktionsbedingungen gegenüber den Katalysatoren nicht völlig stabil sind.

Als Monohalogencarbonsäurehalogenide oder -anhydride sind vorwiegend solche geeignet, die sich ableiten von Säuren, die das Halogen an einem primären oder sekundären aliphatischen C-Atom tragen. Geeignete Säuren sind z.B. aliphatische Halogencarbonsäuren wie Chlor- oder Bromessigsäure, $\alpha$- oder $\beta$-Chlorpropionsäure, 8-Bromoctansäure usw., ferner auch aromatische Halogencarbonsäuren wie Chlormethylbenzoesäure. Diese Aufzählung soll nur als Beispiel dienen und keine Begrenzung darstellen. Besonders gut geeignet ist z.B. Chloracetylchlorid.

Im allgemeinen wird mindestens 0,5 Mol des Säurehalogenids oder -anhydrides je Mol des im Isobutylencopolymerisat enthaltenen Styrols verwendet. Zur Erreichung vollständigen Umsatzes kann es zweckmäßig sein, mehr zu verwenden, z.B. zwei oder mehr Mol je Mol des im Copolymerisat enthaltenen Styrols.

Die Umsetzung der Halogencarbonsäurechloride oder -anhydride mit den Copolymerisaten erfolgt in Gegenwart von Katalysatoren vom Friedel-Crafts-Typ. Geeignete Katalysatoren sind z.B. Halogenide des Aluminiums, Bors, des $Fe^{III}$ und $Zn^{II}$, um nur einige zu nennen. Bevorzugte Katalysatoren sind $AlCl_3$ oder Alkylaluminiumdichlorid sowie $AlCl_3$ in Kombinationen mit Ethylaluminiumdichlorid. Im allgemeinen werden je Mol Halogencarbonsäure, die in das Copolymerisat eingeführt werden sollen, mindestens ein Mol, vorzugsweise mehr als 1, 2 Mol Aluminiumhalogenid benötigt. Der Katalysator kann entweder in der Copolymerisatlösung suspendiert oder gelöst werden oder zusammen mit dem Säureanhydrid oder -halogenid zugegeben werden, in denen er häufig gut löslich ist. Ein bevorzugter weil besonders preiswerter Katalysator ist $AlCl_3$.

Die Reaktionstemperatur für die Friedel-Crafts-Reaktion liegt zwischen 0 und 70, vorzugsweise 25 bis 50 °C. Bei tieferen Temperaturen ist die Reaktionsgeschwindigkeit zu gering, bei höheren Temperaturen wird das Copolymerisat zu niedrigen Molekulargewichten abgebaut.

Nach der Reaktion wird der Katalysator durch Zugabe von Eis oder viel Wasser zerstört. Die organische, das Copolymerisat enthaltende Schicht wird dann solange gewaschen, bis das Waschwasser einen pH-Wert von größer als 3 zeigt. Darauf wird noch gelöstes oder suspendiertes Wasser durch Auskreisen entfernt. Anschließend kann die Lösung durch Filtration von unlöslichen Anteilen befreit werden. Aus der Lösung kann dann das Copolymerisat nach bekannten Methoden, z.B. durch Fällen mit einem Nichtlöser wie Methanol oder Ethanol oder durch Verdampfen des Lösungsmittels im Vakuum, isoliert werden. Diese Copolymerisate lassen sich durch Mischen mit Aminen oder Polyamin, vorzugsweise Diaminen, zu elastischen Massen vernetzen. Diese Reaktion läuft bereits bei Zimmertemperatur mit ausreichender Geschwindigkeit ab, läßt sich jedoch durch Erwärmen auf 50 bis 60 °C erheblich beschleunigen.

Will man die Copolymerisate weiter zu den tertiären Aminogruppen enthaltenden Copolymerisaten verarbeiten, so ist die Isolierung nicht zweckmäßig. Vielmehr benützt man die nach der Entfernung des Wassers und Filtration erhaltene Lösung direkt für die Umsetzung mit den Alkanolaminen (II) oder (III).

Sie wird zu diesem Zweck mit mindestens einem Mol des Amins (II) oder (III) versetzt. Zur Aufnahme des entstehenden Halogenwasserstoffes und zur Vermeidung von Vernetzung setzt man jedoch zweckmäßig einen Überschuß des Amins ein, z.B. insgesamt 2 bis 5 Mol je Mol des im Copolymerisat enthaltenen Halogens. Statt eines Überschußes kann man jedoch auch andere tertiäre Amine oder Alkalihydroxid oder -alkoholat verwenden.

Die Umsetzung findet bevorzugt bei erhöhter Temperatur zwischen 50 und 150 °C statt. Sie verläuft dann mit erhöhter Geschwindigkeit ab. Anschließend wird, gegebenenfalls nach Entfernen des überschüssigen Amins durch Abdestillieren im Vakuum oder Wasserwäsche, das Copolymerisat aus seiner Lösung isoliert, z.B. durch Fällen mit Nichtlösungsmitteln wie Ethanol oder Methanol, oder durch Abtreiben des Lösungsmittels mit oder ohne Wasserdampf gegebenenfalls im Vakuum.

Die aus ihren Lösungen isolierten Copolymerisate sind bei richtiger Reaktionsführung hellgelb bis dunkelbraun gefärbte klebrige Massen mit kaltem Fluß, die rückstandslos in Kohlenwasserstoffen und vielen anderen Lösungsmitteln löslich sind.

Die Copolymerisate können gegebenenfalls in Mischung mit anderen Polymeren als Ausgangsstoffe für Polyurethane oder Epoxidharze und zur Modifizierung anderer Kunststoffe verwendet werden.

Sie können mit Di- oder Triisocyanaten zu je nach Zusammensetzung weich-oder hartelastischen Massen vernetzt werden. Elastomere aus Ausgangscopolymerisaten mit Styrolgehalten kleiner als 30 Gew.%, vorzugsweise kleiner als 10 Gew.%, zeigen Diffusionswiderstände für Wasserdampf und andere Gase, die vergleichbar sind mit den Werten, die beim Isobutylenhomopolymerisat gemessen werden.

Für die Verwendung der erfindungsgemäßen Copolymerisate in Polymermischungen bzw. als Bestandteil von Polyurethanen ist anzustreben, daß mindestens eine, besser zwei der erfindungsgemäßen substituierten Vinylaromaten je Polymermolekül vorhanden sind. Entsprechend ist zur Erreichung der gewünschten Eigenschaften bei niederen Molekulargewichten ein höherer Styrolgehalt erforderlich als bei hohen Molekulargewichten.

In den folgenden Beispielen wird die Erfindung erläutert, ohne ihren Umfang einzuschränken.

Beispiel 1

Herstellung eines Isobutylen-Styrol-Copolymerisats

Ein mit Kühlmantel, wandgängigem Ankerrührer, einem mit Sole von -40 °C beschickten Rückflußkühler und Dosiereinrichtungen für zwei Katalysatorkomponenten ausgerüsteter 10 Liter-Reaktor wird zur Entfernung von Katalysatorgiften mit einer Lösung von $Al(Et)_3$ in Cyclohexan ausgekocht. Nach Ablassen dieser Lösung wird er mit 1426 $cm^3$ = 891 g Isobutylen, 49 g unstabilisiertem Styrol und 800 $cm^3$ n-Butan beschickt. Diese Substanzen wurden zuvor durch Filtration über Molekularsieb 3 A 574 (Lieferant Fa. Grace GmbH) von die Copolymerisation störenden Verunreinigungen und Feuchtigkeit befreit. Die Copolymerisation wird bei einem partiellen Vakuum von 476 mbar und gutem Rühren durch gleichzeitige tropfenweise Dosierung einer 0,01 molaren Lösung von $AlEtCl_2$ und einer 0,01 molaren Lösung von t-Butylchlorid in n-Octan in Gang gesetzt, wobei die Reaktionswärme durch Siedekühlung abgeführt wird. Die Reaktion ist nach Zugabe von jeweils 24 $cm^3$ und nach 75 min. vollständig, wobei die Monomeren restlos umgesetzt werden. Es wurde eine Katalysatorproduktivität von 31 000 g Copolymerisat/g $AlEtCl_2$ erreicht. Die Copolymerisatlösung wird in einen zweiten, gerührten, mit Rückflußkühler versehenen 5-Liter-Reaktor abgelassen, der zuvor mit 1000 $cm^3$ n-Octan und 5 $cm^3$ Methanol beschickt wurde. Zur vollständigen Entfernung des Butans und des Methanols wird der Inhalt so lange abdestilliert, bis der Siedepunkt des Lösungsmittels erreicht ist.

Eigenschaften des Isobutylen-Styrol-Copolymerisats

Farbloses und transparentes Harz mit kaltem Fluß; Mw/Mn = 3,5; Mw = 30000, gemessen durch GPC, wobei eine mit engverteilten Polyisobutylen-Standardproben ermittelte Eichkurve verwendet wurde.
Staudingerindex: Jo = 29
Styrolgehalt: 5 Gew.%

(Der Zahlenwert des Staudingerindexes Jo in $cm^3g^{-1}$ entspricht dem 100-fachen der früher gebräuchlichen Grenzviskosität (dl/g) und ist identisch mit der sog. limiting viscosity number, die als Ersatz für die intrinsic viscosity eingeführt worden ist. Mw = Molekulargewicht aus dem Gewichtsmittel, Mn = Molekulargewicht aus dem Zahlenmittel).

Beispiel 2

Chloracetylierung des Isobutylen-Styrol-Copolymerisats

900 g des Copolymerisats gemäß Beispiel 1 werden im 900 $cm^3$ 1,2-Dichlorbenzol gelöst und unter Rühren in 90 Minuten bei 30 °C in eine Lösung von 155 g Aluminiumtrichlorid, 160 g Chloracetylchlorid und 500 $cm^3$ 1,2-Dichlorbenzol getropft.

Nach 3 Stunden bei 30 °C wird mit 300 g Eis abgebrochen, ein Liter Wasser und 10 $cm^3$ konzentrierte HCl zugegeben, die untere Schicht abgetrennt und die organische Phase so lange mit destilliertem Wasser gewaschen, bis pH = 5 erreicht ist. Dann wird das in der organischen Phase noch enthaltene Wasser azeotrop bei 100 mbar abdestilliert und die Lösung zur Abtrennung unlöslicher Anteile über ein Filter des Typs K 250 (Fa. Seitz) mit 14 cm Durchmesser mit 3,5 bar Überdruck filtriert.

Eine Probe wird mit Ethanol gefällt und im Hochvakuum bei 90 °C getrocknet. Es wird ein Chlorgehalt von 1,6 Gew.% gefunden (Theorie 1,67 Gew.%). Der Staudingerindex hat sich nicht verändert und beträgt 29.

Beispiel 3

Vernetzung mit Nitrilotrisethanamin

5 g des Copolymerisats gemäß Beispiel 2 werden in 50 $cm^3$ Cyclohexan gelöst und mit 0,67 g

Nitrilotrisethanamin gemischt. Die Lösung wird in eine aus Silikonpapier gefaltete Wanne der Dimension 10 x 10 cm und 2 cm Wandhöhe gegossen und unter Stickstoff im Trockenofen bei 100° C getrocknet. Es wird eine bernsteinfarbene elastische, in Cyclohexan unlösliche Folie erhalten.

Beispiel 4

Umsetzung des chloracetylierten Copolymerisats mit N-Methylethanolamin

Zu einem Liter der Lösung aus der Chloracetylierung (entsprechend 400 g des Copolymerisats gemäß Beispiel 2) werden 68 g N-Methylethanolamin gegeben und es wird auf 155° C erhitzt. Nach einer Stunde wird unter gutem Rühren in 3 l Ethanol gegossen. Das absitzende Copolymerisat wird nach Abgießen der überstehenden Lösung mit Ethanol ausgeknetet, in 600 $cm^3$ Cyclohexan gelöst, erneut mit Ethanol gefällt, ausgeknetet und im Trockenschrank bei 1 mbar und 100° C über Nacht getrocknet. Das Copolymerisat bildet eine klebrige Schmelze, die den gleichen Staudingerindex aufweist wie das Ausgangspolymerisat (29).
Stickstoffgehalt nach Kjeldahl:
0,63 Gew.% (Theorie ca. 0,62 Gew.%)

Beispiel 5

Vernetzung mit Hexamethylendiisocyanat (HMDI)

5 g des Copolymerisats gemäß Beispiel 4 werden in 50 $cm^3$ Cyclohexan gelöst, mit 11 $cm^3$ einer 2 molaren Lösung von HMDI in Cyclohexan gemischt und sofort in eine Siliconwanne der zuvor beschriebenen Dimension gegossen. Die Lösung geliert nach wenigen Minuten. Nach Abtrocknen über Nacht wird ein transparenter, bernsteinfarbener, elastischer Film erhalten, der sich von der Unterlage abziehen läßt.

Beispiel 6

Umsetzung des chloracetylierten Copolymerisats mit Diethanolamin

Ein Liter der Lösung aus der Chloracetylierung (entsprechend 400 g des Copolymerisats gemäß Beispiel 2) werden wie in der Vorschrift zuvor mit 95 g Diethanolamin umgesetzt und aufgearbeitet. Das entstandene bernsteinfarbene Copolymerisat hat einen Staudingerindex von 30 und einen Stickstoffgehalt nach Kjeldahl von 0,6 Gew.% (Theorie 0,6 Gew.%).

Die Vernetzung mit HMDI nach der obigen Vorschrift ergibt einen bernsteinfarbenen, elastischen, transparenten, nichtklebenden Film, der sich leicht vom Silikonpapier abziehen läßt.

Beispiel 7

Es wurde ein 5 Gew.% Styrol enthaltendes Isobutylencopolymerisat in Anlehnung an das in der EP-A-115 635 beschriebene kontinuierliche Verfahren hergestellt.

Gasförmiges Isobutylen (99 Gew.% Gehalt) wurde in einem mit Molekularsieb (Zeolithe QMO5-564 der Fa. Grace) gefüllten Reinigungsturm getrocknet und in ein mit Dewar-Rückflußkühler (Füllung: Methanol-Kohlensäure) versehenes kalibriertes Vorratsgefäß kondensiert. Dem Kondensat wurde über Aluminiumtriethyl destillierten Styrol zugesetzt, so daß die Mischung 5 Gew.% Styrol enthielt. Anschließend wurde über den Reinigungsturm soviel gasförmiges n-Butan in das Vorratsgefäß kondensiert, daß die Mischung 24 Gew.% davon enthielt.

Die Copolymerisation wurde kontinuierlich unter Siedekühlung in einem zylinderförmigen gläsernen Reaktor durchgeführt, der mit einem Methanol/-Kohlensäure gekühlten Rückflußkühler versehen ist. Der Zulauf der Monomerenmischung erfolgt so, daß sie vor Eintritt in die Reaktionszone mit dem sich bildenden

Rückfluß sowie dem Coinitiator (t-Butylchlorid) gemischt wird. Der Initiator wurde in Form einer 0,05 molaren Lösung von $Al(C_2H_5)Cl_2$ in n-Hexan so zudosiert, daß er sich erst in der Reaktionszone am Ablauf des Rückflußkühlers mit dem Zulauf mischt. Je Stunde wurde 6,2 l des Monomeren/-Butan-Gemisches, und 0,001 mol der $Al(C_2H_5)Cl_2$-Lösung bzw. des t-Butylchlorides bei Normaldruck zudosiert.

Der Zulauf polymerisierte vorwiegend während des freien Falles unter Ausbildung einer Schaumschicht, die durch kontinuierliches Abziehen der Reaktionsprodukte durch einen Bodenablauf etwa in der Mitte des Reaktors gehalten wurde.

Der Ablauf von ca. einer Stunde wurde gesammelt, wobei ca. 3 kg Copolymerisat entstanden. Die Isolierung des Copolymerisats erfolgte nach Zumischen von 10 $cm^3$ Methanol durch Entgasung der Lösung bei ca. 210 °C und 0,3 mbar, wobei eine glasklare Schmelze anfiel.

Mw/Mn = 5,0 (aus GPC ermittelt)
Mw: 26000
Styrolgehalt: 5,1 Gew.%
Staudingerindex: 27.

Durch Vergleich der mit Brechungsindex- und U.V.-Detektoren gewonnenen Adsorptionskurven der GPC-Messung ist qualitativ zu erkennen, daß der Styrolgehalt des Copolymerisats mit steigendem Molekulargewicht abnimmt.

Beispiel 8

Chloracetylierung des Copolymerisats gemäß Beispiel 7

900 g des Copolymerisats werden in 1,3 l Dekalin gelöst und 150 g fein pulverisiertes wasserfreies Aluminiumtrichlorid zugegeben. Unter gutem Rühren läßt man 115 g Chloracetylchlorid zulaufen.

Der Ansatz wird weitere 2 Stunden bei 30 °C gerührt. Dann wird durch Zugabe von 400 g Eis und einem Liter Wasser abgebrochen, die wäßrige Schicht abgetrennt und mit destilliertem Wasser bei 85 °C so lange gewaschen, bis das Abwasser pH = 5 zeigt. Zur Abtrennung noch enthaltenen Wassers wird die Lösung andestilliert.

Eine Probe wird mit Alkohol gefällt und im Vakuum (1 mbar) bei 120 °C getrocknet. Der Chlorgehalt beträgt 1,5 Gew.% (Theorie 1,70 Gew.%). Mit Nitrilotrisethanamin entsteht eine elastische, in Cyclohexan unlösliche Folie (vgl. Beispiel 3).

Beispiel 9

Umsetzung mit N-Methylethanolamin

Zu 900 $cm^3$ der Lösung aus der Chloracetylierung (ca. 400 g Copolymerisat gemäß Beispiel 8) werden 68 g N-Methylethanolamin gegeben, es wird 3 Stunden auf 150 °C erwärmt, auf 100 °C abgekühlt und unter gutem Rühren 21 g Kalium-t-butanolat in 150 $cm^3$ Toluol zugegeben. Nach 30 Minuten wird das überschüssige Amin azeotrop abdestilliert. Nach Abkühlen wird die Lösung mit 3 bar über ein Seitzfilter Typ K 250 von 14 cm Durchmesser filtriert, um das ausgeschiedene Kaliumchlorid abzutrennen. Das Copolymerisat wird schließlich durch Abdestillieren des Dekalins in einem Labordünnschichtverdampfer des Systems Sambay (Best.-Nr. PVS 2, Fa. Quickfit, 62 Wiesbaden-Schierstein, Schloßbergstr. 11) mit einer Verdampferfläche von 0,016 $m^2$, einer Heiztemperatur von 230 °C, einem Vakuum von 1,5 mbar und einem Durchsatz von einem Liter pro Stunde aus der Lösung isoliert. In die anfallende Copolymerisationsschmelze wird 0,2 Gew.% Di-t-butyl-p-kresol zur Stabilisierung eingerührt. Stickstoffgehalt nach Kjeldahl: 0,67 Gew.%; Staudingerindex = 27,5.

5 g des Copolymerisats, gelöst im Cyclohexan, werden mit HMDI nach der im Beispiel 5 gegebenen Vorschrift umgesetzt und ergeben einen elastischen, transparenten, nicht klebenden Film.

Beispiel 10

Umsetzung des chloracetylierten Copolymerisats mit Diethanolamin

900 $cm^3$ der Lösung aus der Chloracetylierung (ca. 400 g Copolymerisat gemäß Beispiel 8) werden mit 100 g Diethanolamin versetzt und unter intensivem Rühren 3 Stunden auf 150 °C erhitzt. Nach Abkühlen auf 100 °C werden 21 g Kalium-t-butanolat eingerührt. Das Toluol sowie das überschüssige Amin werden abdestilliert, bzw. azeotrop ausgekreist, zuletzt unter einem Vakuum von 100 mbar.

Das abgeschiedene Kaliumchlorid wird, wie zuvor beschrieben, abfiltriert und das Copolymerisat isoliert. Stickstoffgehalt nach Kjeldahl: 0,63 Gew.%, Staudingerindex = 28.

Das Copolymerisat ergibt mit HMDI nach der im Beispiel 5 beschriebenen Methode verarbeitet einen elastischen, transparenten, nicht klebenden, bernsteinfarbenen Film.

Beispiel 11

Herstellung eines epoxidgehärteten Harzes

5 g des Copolymerisats gemäß Beispiel 10 werden in 30 $cm^3$ Dichlormethan mit 700 mg Epicote 828 (Handelsname der Shell AG für Bisphenol-A-diglycidylether; Epoxidwert = 189) gut gemischt und in eine Schale aus siliconiertem Papier gegossen. Nach einem Tag bei 100 °C gehärtet, werden transparente, elastische, in Lösungsmitteln unlösliche Filme erhalten.

## Ansprüche

1. Copolymerisate des Isobutylens mit Molekulargewichten - bestimmt durch Gelpermeationschromatographie - von 700 bis 200 000, bestehend aus

a) 60 bis 99 Gewichtsteilen Isobutylen und

b) 1 bis 40 Gewichtsteilen eines substituierten Vinylaromaten der allgemeinen Formel (I):

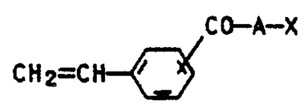

I,

worin A ein Alkylen-, Cycloalkylen- oder Arylenrest mit maximal 22 Kohlenstoffatomen und X ein Halogen oder eine tertiäre Aminogruppe der allgemeinen Formeln:

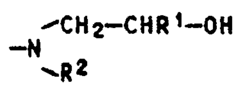

oder

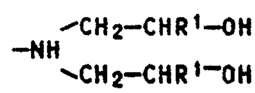

ist, in denen $R^1$ eine $C_1$- bis $C_4$-Alkylgruppe oder Wasserstoff und $R^2$ ein Alkyl-, Cycloalkyl- oder Arylrest mit maximal 10 Kohlenstoffatomen bedeuten.

2. Copolymerisate des Isobutylens nach Anspruch 1, bestehend aus 60 bis 99 Gewichtsteilen Isobutylen und 1 bis 40 Gewichtsteilen Vinyl-ß-N-methyl-(N-oxyethylamino)-acetophenon oder 1 bis 40 Gewichtsteilen Vinyl-ß-chloracetophenon.

3. Verfahren zur Herstellung der Copolymerisate des Isobutylens nach Anspruch 1, dadurch gekennzeichnet, daß ein entsprechendes Isobutylen-Vinylaromat-Copolymerisat nach Friedel-Crafts-Reaktion mit einem Monohalogencarbonsäureanhydrid oder Monohalogencarbonsäurehalogenid und gegebenenfalls anschließend mit einem oder mehreren Aminen der allgemeinen Formeln (II) oder (III):



(II) oder



(III)

worin $R^1$ und $R^2$ die oben angegebenen Bedeutungen aufweisen, umgesetzt wird.

4. Verwendung der N-Oxyethylaminogruppen enthaltenden Isobutylencopolymerisate nach Anspruch 1 zur Herstellung der entsprechenden Polyurethane bzw. Epoxidharze durch übliche Umsetzung mit Diisocyanaten bzw. Epoxiden.

5. Verwendung der Halogencarbonsäurereste enthaltenden Isobutylencopolymerisate nach Anspruch 1 als mit Aminen oder Polyaminen vernetzbare Polymerisatmassen.